# EUROPEAN PATENT APPLICATION

(11) **EP 4 122 632 A1**
(43) Date of publication of application: **25.01.2023**
(21) Application number: 21772247.9
(22) Date of filing: 09.03.2021
(51) Int. Cl.: B23K 20/00

(54) **JOINED BODY AND METHOD FOR MANUFACTURING JOINED BODY**

(30) Priority: 18.03.2020 JP 2020047794
(71) Applicant: Mitsubishi Materials Corporation, Tokyo 100-8117 (JP)
(72) Inventor: ARAI, Koya, Saitama-shi, Saitama 330-8508 (JP)
(74) Representative: Hoffmann Eitle
(86) International application number: PCT/JP2021/009225
(87) International publication number: WO 2021/187227

(57) **Abstract**

A bonded body is a bonded body in which a first metal member is bonded to a second metal member, where the first metal member is formed of a material having a hardness higher than that of the second metal member. The bonded body has a structure in which the second metal member is inserted into a protruded and recessed portion formed on a bonding surface of the first metal member, and the bonded body has a region in which the first metal member is in direct contact with the second metal member, and a gap between the first metal member and the second metal member is filled with a resin material.

## Description

### TECHNICAL FIELD

The present invention relates to a bonded body in which a first metal member and a second metal member, which are made of metals different from each other, are bonded to each other, and a method for manufacturing the bonded body.

Priority is claimed on Japanese Patent Application No. 2020-047794, filed March 18, 2020, the content of which is incorporated herein by reference.

### BACKGROUND ART

In the related art, in a case of bonding members made of metals different from each other, diffusion bonding may be applied, for example, as disclosed in Patent Document 1. In a case where such diffusion bonding is carried out, the bonding is carried out under relatively high temperature conditions, and there is concern that an intermetallic compound may be generated at the bonding interface, which causes brittle fracture. In addition, since diffusion is used, there is a problem that applicable metal combinations are limited.

Here, for example, Patent Document 1 proposes a method for bonding different kinds of metal plates, in which a first metal plate and a second metal plate are overlapped and bonded by utilizing frictional heat. In the method of Patent Document 1, the first metal plate and the second metal plate are softened and deformed by pressing a processing tool having a bending part while rotating it, and these are bonded to each other to form a structure.

Further, Patent Document 2 proposes a bonded product in which a zinc-based plated steel sheet and an aluminum alloy plate are bonded by an adhesive.

### [Citation List]

### [Patent Documents]

[Patent Document 1]
   Japanese Patent No. 5854451
[Patent Document 2]
   Japanese Patent No. 6393592

### SUMMARY OF INVENTION

### Technical Problem

By the way, in the method disclosed in Patent Document 1, the first metal plate and the second metal plate are deformed with a processing tool; however, there is concern that a gap may be generated between the first metal plate and the second metal plate. In a case where moisture or the like infiltrates into this gap, deterioration such as corrosion is caused.

Further, in the method disclosed in Patent Document 2, an adhesive is interposed between the metal members, and there is concern that the conductivity and the thermal conductivity are greatly deteriorated.

The present invention has been made in consideration of the above-described circumstances, An object of the prevent invention is to provide a bonded body in which metal members made of metals different from each other are reliably bonded to each other, which has excellent electrical conductivity and thermal conductivity, and can suppress the infiltration of moisture and the like into the gap between the metal members, and a method for manufacturing a bonded body.

### Solution to Problem

In order to solve the above problems, the bonded body of the present invention is characterized by being a bonded body in which a first metal member is bonded to a second metal member, where the first metal member is formed of a material having a hardness higher than that of the second metal member, the bonded body has a structure in which the second metal member is inserted into a protruded and recessed portion formed on a bonding surface of the first metal member, the bonded body has a region in which the first metal member is in direct contact with the second metal member, and a gap between the first metal member and the second metal member is filled with a resin material.

According to the bonded body of the present invention, since the first metal member is formed of a material having a hardness higher than that of the second metal member, and the bonded body has a structure in which the second metal member is inserted into a protruded and recessed portion formed on a bonding surface of the first metal member, the first metal member is reliably bonded to the second metal member.

In addition, since the bonded body has a region in which the first metal member is in direct contact with the second metal member, the bonding interface does not become a major obstacle to electrical conductivity and thermal conductivity, whereby the bonded body has excellent electrical conductivity and thermal conductivity.

Further, since the gap between the first metal member and the second metal member is filled with a resin material, moisture or the like does not infiltrate into the gap, whereby corrosion or the like can be prevented.

The method for manufacturing a bonded body of the present invention is characterized by being a method for manufacturing a bonded body in which a first metal member is bonded to a second metal member, the method including:
a protruded and recessed portion forming step of forming a protruded and recessed portion on a bonding surface of the first metal member formed of a material having a hardness higher than that of the second metal member;
a stacking step of stacking the second metal member on the bonding surface of the first metal member on which the protruded and recessed portion is formed, via a resin material; and
a bonding step of heating and bonding the first metal member and the second metal member while pressurizing the first metal member and the second metal member in a stacking direction,
in which in the bonding step, the second metal member is inserted into the protruded and recessed portion of the first metal member, and
a gap between the first metal member and the second metal member is filled with the resin material.

According to the method for manufacturing a bonded body having this configuration, a protruded and recessed portion is formed on a bonding surface of the first metal member formed of a material having a hardness higher than that of the second metal member, and the second metal member is stacked on this bonding surface, via a resin material, and pressurized in a stacking direction. As a result, the second metal member is deformed and inserted into the protruded and recessed portion of the first metal member, and the gap between the first metal member and the second metal member is filled with a resin material, whereby it is possible to manufacture a bonded body that has excellent electrical conductivity and thermal conductivity and can suppress the infiltration of moisture and the like into the gap between the metal members.

### Advantageous Effects of Invention

According to the present invention, it is possible to provide a bonded body in which metal members made of metals different from each other are reliably bonded to each other, which has excellent electrical conductivity and thermal conductivity, and can suppress the infiltration of moisture and the like into the gap between the metal members, and a method for manufacturing a bonded body.

### BRIEF DESCRIPTION OF DRAWINGS

Fig. 1 is a schematic explanatory view of a bonded body according to an embodiment of the present invention. Fig. 1(a) is a schematic cross-sectional view, and Fig. 1(b) is an enlarged explanatory view of a bonding interface.
Fig. 2 is a flow chart of a method for manufacturing a bonded body according to an embodiment of the present invention.
Fig. 3 is a schematic explanatory view of the method for manufacturing a bonded body according to the embodiment of the present invention. Fig. 3(a) shows a protruded and recessed portion forming step, Fig. 3(b) shows a stacking step, Fig. 3(c) shows a bonding step, and Fig. 3(d) shows an obtained bonded body.

### DESCRIPTION OF EMBODIMENTS

Hereinafter, embodiments of the present invention will be described with reference to the accompanying drawings. Each embodiment to be described below is specifically described for a better understanding of the gist of the invention and does not limit the present invention unless otherwise specified. In addition, in the drawings used in the following description, for convenience, a portion that is a main part may be enlarged in some cases in order to make the features of the present invention easy to understand, and the dimensional ratio or the like of each component is not always the same as the actual one.

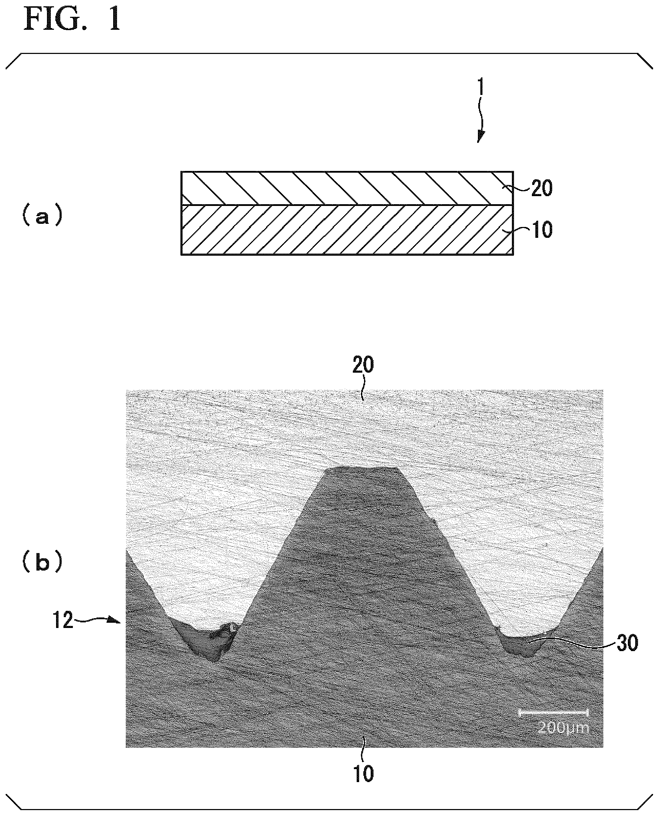

As shown in Fig. 1, a bonded body 1 according to the present embodiment has a structure in which a first metal member 10 and a second metal member 20, which are formed of metals different from each other, are bonded to each other.

Here, the first metal member 10 is formed of a material having a hardness higher than a hardness of the second metal member 20. The ratio H1/H2 of the hardness H1 of the first metal member 10 to the hardness H2 of the second metal member 20 is preferably in a range of 1.3 or more, and more preferably in a range of 1.5 or more.

More specifically, in a case where the first metal member 10 is formed of a metal that has been subjected to an annealing treatment, the H1/H2 is preferably in a range of 1.3 or more. In a case where the first metal member 10 is formed of a metal that has not been subjected to an annealing treatment or the like, the H1/H2 is preferably in a range of 1.5 or more.

In the manufacturing method described later, the bonded body 1 having an H1/H2 of 1.5 or more obtained in a bonding step S03 may be subjected to an annealing treatment to obtain the bonded body 1 having an H1/H2 of 1.3 or more, or the bonded body 1 having an H1/H2 of 1.3 or more may be obtained by being formed of a metal that is annealed by the bonding temperature.

Further, the upper limit of the H1/H2 is preferably 110.

In the present embodiment, the first metal member 10 is formed of a copper plate made of oxygen-free copper (hardness: 55 Hv), and the second metal member 20 is formed of an aluminum plate made of 4N aluminum having a purity of 99.99% by mass or more (hardness: 29 Hv).

The hardness (Hv) indicated in the present embodiment is the Vickers hardness obtained according to a Vickers hardness test.

The first metal member 10 is not particularly limited as long as the relationship between the hardness H1 of the first metal member 10 and the hardness H2 of the second metal member 20 is within the above range; however, it is favorable to use a member made of oxygen-free copper, an aluminum alloy (A6063, duralumin, or the like), or stainless steel (SUS).

The second metal member 20 is not particularly limited as long as the relationship between the hardness H1 of the first metal member 10 and the hardness H2 of the second metal member 20 is within the above range; however, it is favorable to use a member made of 4N aluminum having a purity of 99.99% by mass or more or 1000 series aluminum (pure aluminum having a purity of 99.00% by mass or more).

The bonded body has a structure in which at the bonding interface between the first metal member 10 and the second metal member 20, as shown in Fig. 1(b), the second metal member 20 is inserted into a protruded and recessed portion 12 formed on the bonding surface of the first metal member 10, and the bonded body has a region in which the first metal member 10 is in direct contact with the second metal member 20.

That is, the bonded body has a structure in which the second metal member 20 having low hardness is deformed and inserted into the protruded and recessed portion 12 formed on the bonding surface of the first metal member 10.

Here, in the present embodiment, the protruded and recessed portion 12 is composed of a plurality of grooves that extend in parallel in one direction, and the cross section orthogonal to the extending direction has a substantially triangular shape. At the side surface portion of this groove, the first metal member 10 is in direct contact with the second metal member 20.

The height from the bottom part to the apex part of the protruded and recessed portion 12 is within a range of 0.1 mm or more and 5 mm or less. In addition, the spacing between grooves is set within a range of 0.1 mm or more and 5 mm or less.

Further, the region in which the first metal member 10 is in direct contact with the second metal member 20 (that is, the region in which the second metal member 20 is inserted into the protruded and recessed portion 12) is set in a range of 50% or more of the height from the bottom part to the apex part of the protruded and recessed portion 12.

In addition, the bottom part of the recessed portion of the protruded and recessed portion 12 formed on the bonding surface of the first metal member 10 is filled with a resin material 30.

Here, the resin material 30 with which the first metal member 10 is filled is preferably a resin having adhesiveness, where the main component of the resin material is preferably those having thermoplasticity and heat resistance, for example, fluororesin, polyimide, and polyamide. In the present embodiment, the resin material 30 with which the recessed portion of the protruded and recessed portion 12 is filled is formed of fluororesin.

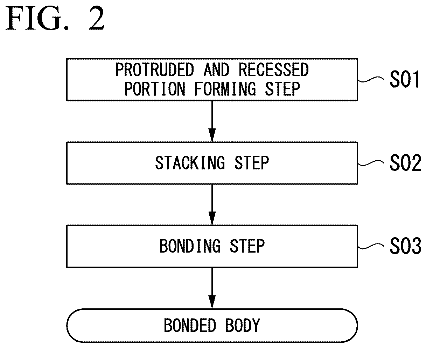

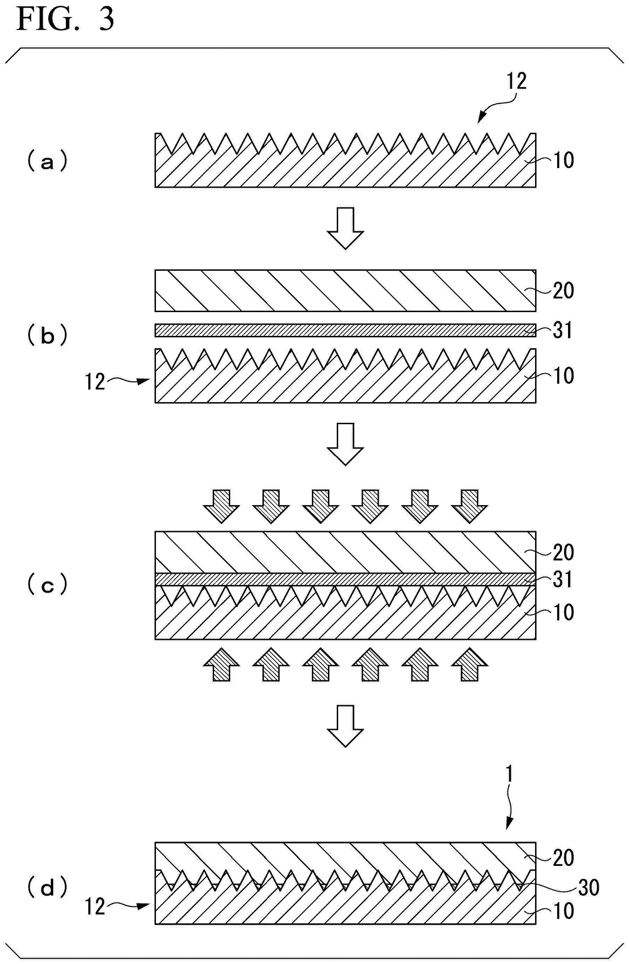

Hereinafter, a method for manufacturing a bonded body 1 according to the present embodiment having the above-described configuration will be described with reference to Fig. 2 and Fig. 3.

### (Protruded and recessed portion forming step S01)

First, as shown in Fig. 3(a), the protruded and recessed portion 12 is formed on the bonding surface of the first metal member 10. The method for forming the protruded and recessed portion 12 is not particularly limited, and various existing methods can be applied.

In the present embodiment, the bonding surface of the first metal member 10 is subjected to knurling to form the protruded and recessed portion 12 composed of a plurality of grooves that extend in parallel in one direction.

### (Stacking step S02)

Next, as shown in Fig. 3(b), the second metal member 20 is stacked on the bonding surface of the first metal member 10 on which the protruded and recessed portion 12 is formed, via a resin material.

Here, in the present embodiment, a resin sheet 31 using a fluororesin Fluon + EA-2000 manufactured by AGC Inc. is disposed as the resin material. The thickness of the resin sheet 31 is preferably in a range of 1 µm or more and 100 µm or less.

### (Bonding step S03)

Next, as shown in Fig. 3(c), the first metal member 10 and the second metal member 20 stacked by via the resin sheet 31 are heated and bonded while being pressurized in the stacking direction.

As a result, the second metal member 20 having low hardness is deformed and inserted into the protruded and recessed portion 12 of the first metal member 10. Further, the resin sheet 31 is cut due to pressurization and inserted into the protruded and recessed portion 12 together with the second metal member 20, whereby the gap between the first metal member 10 and the second metal member 20 is filled with the resin material 30.

Here, the pressurizing pressure in the bonding step S03 is preferably set in a range of 10 MPa or more and 100 MPa or less.

In a case where the pressurizing pressure is set to 20 MPa or more, the second metal member 20 can be sufficiently inserted into the protruded and recessed portion 12 of the first metal member 10, and thus the bonding strength can be ensured. On the other hand, in a case where the pressurizing pressure is set to 60 MPa or less, it is possible to suppress that the second metal member 20 is deformed more than necessary, and thus it is possible to maintain the shape of the bonded body 1.

The lower limit of the pressurizing pressure in the bonding step S03 is preferably set to 10 MPa or more, and more preferably 30 MPa or more. Further, the upper limit of the pressurizing pressure in the bonding step S03 is preferably set to 100 MPa or less, and more preferably 60 MPa or less.

Further, the heating temperature in the bonding step S03 is preferably set in a range of 100°C or higher and 450°C or lower.

In a case where the heating temperature is set to 300°C or higher, the second metal member 20 can be softened to be sufficiently inserted into the protruded and recessed portion 12 of the first metal member 10, and thus the bonding strength can be ensured. On the other hand, in a case where the heating temperature is set to 450°C or lower, it is possible to suppress the generation of an intermetallic compound between the first metal member 10 and the second metal member 20.

The lower limit of the heating temperature in the bonding step S03 is preferably set to 100°C or higher, and more preferably 300°C or higher. Further, the upper limit of the heating temperature in the bonding step S03 is preferably set to 450°C or lower, and more preferably 400°C or lower.

Further, the holding time at the heating temperature in the bonding step S03 is preferably set in a range of 1 minute or more and 60 minutes or less.

In a case where the holding time at the heating temperature is set to 1 minute or more, the second metal member 20 can be softened to be sufficiently inserted into the protruded and recessed portion 12 of the first metal member 10, and thus the bonding strength can be ensured. On the other hand, in a case where the holding time at the heating temperature is set to 60 minutes or less, it is possible to suppress the generation of an intermetallic compound between the first metal member 10 and the second metal member 20.

The lower limit of the holding time at the heating temperature in the bonding step S03 is preferably set to 1 minute or more, and more preferably 5 minutes or more. Further, the lower limit of the holding time at the heating temperature in the bonding step S03 is preferably set to 60 minute or less, and more preferably 30 minutes or less.

As described above, the bonded body 1 according to the present embodiment is manufactured according to the protruded and recessed portion forming step S01, the stacking step S02, and the bonding step S03.

According to the bonded body 1 of the present embodiment having such a configuration as described above, since the first metal member 10 is formed of a material having a hardness higher than that of the second metal member 20, and the bonded body has a structure in which the second metal member 20 is inserted into a protruded and recessed portion 12 formed on a bonding surface of the first metal member 10, the first metal member 10 is reliably bonded to the second metal member 20.

In addition, since the bonded body has a region in which the first metal member 10 is in direct contact with the second metal member 20, the bonding interface does not become a major obstacle to electrical conductivity and thermal conductivity, whereby the bonded body has excellent electrical conductivity and thermal conductivity.

In the present embodiment, the height from the bottom part to the apex part of the protruded and recessed portion 12 is set within a range of 0.1 mm or more and 5 mm or less, the region in which the first metal member 10 is in direct contact with the second metal member 20 (that is, the region in which the second metal member 20 is inserted into the protruded and recessed portion 12) has sufficient bonding strength and is particularly excellent in electrical conductivity and thermal conductivity in a case where it is set in a range of 50% or more of the height from the bottom part to the apex part of the protruded and recessed portion 12.

Further, since the gap between the first metal member 10 and the second metal member 20 is filled with the resin material 30, moisture or the like does not infiltrate into the gap, whereby corrosion or the like can be prevented.

In the present embodiment, in a case where the resin material 30 is formed of fluororesin, the resin material 30 itself has adhesiveness, and thus the bonding strength between the first metal member 10 and the second metal member 20 is can be further improved.

Further, according to the method for manufacturing the bonded body 1 according to the present embodiment, a protruded and recessed portion forming step S01 of forming the protruded and recessed portion 12 on a bonding surface of the first metal member 10 made of a material having a hardness higher than that of the second metal member 20, a stacking step S02 of stacking the second metal member 20 on the bonding surface of the first metal member 10 by via the resin sheet 31, and a bonding step S03 of heating and bonding the first metal member 10 and the second metal member 20 while pressurizing them in a stacking direction are provided. As a result, the second metal member 20 is deformed and inserted into the protruded and recessed portion 12 of the first metal member 10, and the gap between the first metal member 10 and the second metal member 20 is filled with the resin material 30. This makes it possible to manufacture the bonded body 1 according to the present embodiment.

Although the embodiment of the present invention has been described above, the present invention is not limited thereto and can be appropriately modified without departing from the technical idea of the invention.

For example, in the present embodiment, the description has been made by assuming that the first metal member is a copper plate and the second metal member is an aluminum plate. However, the present embodiment is not limited thereto, and the first metal member and the second metal member may be combined with another metal as long as they differ in hardness from each other.

In addition, although the description has been made assuming that a fluororesin is used as the resin material, the present embodiment is not limited thereto, and another resin material may be used.

Further, in the present embodiment, although the description has been made by assuming that the protruded and recessed portion is composed of a plurality of grooves that extend in parallel in one direction, the present embodiment is not limited to this shape, and a protruded and recessed portion having another shape may be good.

### [Examples]

Hereinafter, the results of the confirmation experiment carried out to confirm the effect of the present invention will be described.

First, as the first metal member (10 mm □), a metal having the material and thickness shown in Table 1 was prepared.

As the second metal member, 4N aluminum (30 mm □, thickness:1.6 mm) was prepared.

Then, the bonding surface of the first metal member was subjected to knurling to form a protruded and recessed portion having the shape shown in Table 1.

The second metal member was stacked on the bonding surface of the first metal member, on which the protruded and recessed portion had been formed, via a fluororesin Fluon + EA-2000 film manufactured by AGC Inc. having a thickness of 12 µm. At this time, the arrangement position was adjusted so that the first metal member was arranged at the center of the second metal member.

The stacked first metal member and second metal member were pressurized in the stacking direction and heated to bond the first metal member to the second metal member. Table 1 shows the pressurizing pressure, the heating temperature, and the holding time at the heating temperature in the bonding step.

Regarding those used as the first metal member, the hardness H1 of the oxygen-free copper was 55 Hv, the hardness H1 of the aluminum alloy (A6063) was 60 Hv, the hardness H1 of duralumin was 170 Hv, and the hardness H1 of stainless steel (SUS) was 200 Hv. The hardness H2 of the 4N aluminum used as the second metal member was 29 Hv. The ratio H1/H2 was calculated from these hardnesses and is shown in Table 1.

The shear strength, conductivity, and bonded state of the obtained bonded body were evaluated as follows. The evaluation results are shown in Table 1.

### (Shear strength)

Using a shear strength evaluation tester, the second metal member was fixed horizontally, in a state where the first metal member faced up, and it was pushed at a position of 50 µm above the first metal member horizontally from the side with a shear tool, and then the strength at the time when the first metal member and the second metal member were peeled off from each other was measured.

### (Conductivity)

A tester (TY720, manufactured by Yokogawa Test & Measurement Corporation) was applied between the first metal member and the second metal member, and then a case of less than 500 Ω in the conduction check mode was evaluated as "A", and a case where conduction was not confirmed was evaluated as "B".

### (Bonded state)

Five points in a region in which the first metal member was in direct contact with the second metal member in the cross section of the obtained bonded body were observed using a laser microscope (VK X-200, manufactured by KEYENCE Corporation). At each observation point, the proportion of a region in which the first metal member was in direct contact with the second metal member with respect to the height from the bottom part to the apex part of the protruded and recessed portion was calculated, and then a case where the average value thereof was 50% or more was evaluated as "A", and a case where it was less than 50% was evaluated as "B".

**[Table 1]**

| | First metal member | | Ratio | Protruded and recessed portion | | | Bonding condition | | | Evaluation | | |
|---|---|---|---|---|---|---|---|---|---|---|---|---|
| | Material | Thickness (mm) | H1/H2 | Shape | Depth (mm) | Pitch (mm) | Pressurization load (MPa) | Heating temperature (°C) | Holding time (min) | Shear strength (MPa) | Conductivity | Bonded state |
| Test No. 1 | Oxygen-free copper | 10.0 | 1.9 | V-shaped groove | 0.6 | 0.9 | 50 | 330 | 5 | 1.5 | A | A |
| Test No. 2 | A6063 | 10.0 | 2.1 | V-shaped groove | 0.6 | 0.9 | 50 | 330 | 5 | 2.5 | A | A |
| Test No. 3 | Duralumin | 10.0 | 5.9 | V-shaped groove | 0.6 | 0.9 | 50 | 330 | 5 | 3.9 | A | A |
| Test No. 4 | SUS | 10.0 | 6.9 | V-shaped groove | 0.6 | 0.9 | 50 | 330 | 5 | 1.7 | A | A |
| Test No. 5 | A6063 | 10.0 | 2.1 | V-shaped groove | 0.6 | 0.9 | 30 | 330 | 5 | 2.0 | A | A |
| Test No. 6 | Duralumin | 10.0 | 5.9 | V-shaped groove | 0.6 | 0.9 | 30 | 330 | 5 | 2.2 | A | A |

It was confirmed that the shear strength was sufficiently high in all of the bonded bodies and the bonded bodies are reliably bonded. In addition, it was confirmed that the evaluation of the conductivity is "A", the first metal member is in direct contact with the second metal member, and the conductivity is excellent. Further, it was confirmed that in any one of the bonded bodies, the region in which the first metal member is in direct contact with the second metal member (that is, the region in which the second metal member is inserted into the protruded and recessed portion) is in a range of 50% or more of the height from the bottom part to the apex part of the protruded and recessed portion, and the bonded state is excellent.

From the results of the above, according to the example of the present invention, it was confirmed that it is possible to provide a bonded body in which metal members made of metals different from each other are reliably bonded to each other, which has excellent electrical conductivity and thermal conductivity, and can suppress the infiltration of moisture and the like into the gap between the metal members, and a method for manufacturing a bonded body.

### [Reference Signs List]

1: Bonded body
10: First metal member
12: Protruded and recessed portion
20: Second metal member

## Claims

1. A bonded body comprising a first metal member and a second metal member,
wherein the first metal member is bonded to the second metal member
the first metal member is formed of a material having a hardness higher than that of the second metal member,
the bonded body has a structure in which the second metal member is inserted into a protruded and recessed portion formed on a bonding surface of the first metal member,
the bonded body has a region in which the first metal member is in direct contact with the second metal member, and
a gap between the first metal member and the second metal member is filled with a resin material.

2. A method for manufacturing a bonded body in which a first metal member is bonded to a second metal member, the method comprising:
a protruded and recessed portion forming step of forming a protruded and recessed portion on a bonding surface of the first metal member formed of a material having a hardness higher than that of the second metal member;
a stacking step of stacking the second metal member on the bonding surface of the first metal member on which the protruded and recessed portion is formed, via a resin material; and
a bonding step of heating and bonding the first metal member and the second metal member while pressurizing the first metal member and the second metal member in a stacking direction,
wherein in the bonding step, the second metal member is inserted into the protruded and recessed portion of the first metal member, and
a gap between the first metal member and the second metal member is filled with the resin material.
